(19) Europäisches Patentamt
European Patent Office
Office européen des brevets

(11) EP 3 505 239 A1

(12) EUROPEAN PATENT APPLICATION

(43) Date of publication:
03.07.2019 Bulletin 2019/27

(51) Int Cl.:
B01J 20/06 (2006.01)  B01J 20/08 (2006.01)
B01J 20/28 (2006.01)  B01J 20/30 (2006.01)
C02F 1/28 (2006.01)

(21) Application number: 17210585.0

(22) Date of filing: 26.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicants:
• VITO NV
2400 Mol (BE)
• De Watergroep
1030 Brussel (BE)

(72) Inventors:
• MICHIELSEN, Bart
B-2400 Mol (BE)
• BERGMANS, Jef
B-2400 Mol (BE)
• BROOS, Kris
B-2400 Mol (BE)
• JENNÉ, Rika
B-1030 Brussels (BE)
• PELEMAN, Gisèle
B-1030 Brussels (BE)

(74) Representative: Pronovem
Office Van Malderen
Avenue Josse Goffin 158
1082 Bruxelles (BE)

(54) **SORBENTS FROM IRON-RICH AND ALUMINIUM-RICH STARTING MATERIALS**

(57) Method of manufacturing a sorbent material, comprising mixing (11) a first granular material (20) comprising iron and a second granular material (30) comprising aluminium hydroxide to obtain a mixture. The mixture is subjected to a thermal treatment (12) at a temperature between 400°C and 950°C.

FIG 1

## Description

### Technical field

The present invention is related to methods of manufacturing a sorbent material, and to the sorbent material obtained from such methods. The sorbent material is particularly suited for adsorption of phosphate and arsenic from liquid streams.

### Background art

Over the past decades, the continuous progress and industrialization together with an exponential increase in population and civilization expansion have intensified nutrient use but also the uncontrolled release of nutrient at different ecosystem levels. Most of the released phosphorus enters into rivers, lakes or oceans causing eutrophication, which may be translated as "dead zones" in aquatic systems where nothing can live due to the lack of oxygen. Therefore, regulations are and will become more and more strict to prevent the discharge of phosphates into the environment. Over the past years the use of sorbent materials/installations which adsorb phosphate are gaining more interest as they are easy to maintain and require a low energy input.

The sorption behaviour of phosphate and arsenates strongly resembles. Hence phosphate sorbent materials are equally useful as arsenate sorbent material. Long-term, low level exposure to arsenic in drinking water may increase a person's risk of cancer. Several groundwater resources contain arsenic at increased concentrations, which render these water sources as non-potable (EU drinking water standard: 0.01 mg As/l). Sorbents that lower the arsenate concentration in these water bodies could have a significant positive impact on global human health and increase the amount of groundwater resources that are suitable for drinking water production.

However, as large amounts of these sorbents are needed, they need to fulfill certain requirements, such as low production cost, mechanical stability, high permeability, no attrition, non-toxic and no heavy metal leaching, etc.

It is known that aluminium-rich and/or iron-rich materials are effective phosphate adsorbers. Iron-based sorbents show a higher sorption capacity than aluminium-based sorbents. To form stable iron-based sorbents, there is a need for one of the following: a thermal treatment on high temperature (>1000 °C), causing the material to lose most of its sorption capacity, a binder, or an effective support material. Often an organic binder is used, causing durability problems. In water applications, the binder will disintegrate in time by biological activity.

US 2002/0077249, 20 June 2002 discloses a process for the production of an adsorbent, wherein an aqueous suspension of iron (oxy)hydroxide and/or iron oxide is prepared to which aluminium oxide or hydroxide in suspension or in gelatinous form is admixed. The mixture is shaped and dried until a solid state is achieved in which the iron oxide and/or (oxy)hydroxide is firmly embedded in the aluminium oxide or hydroxide matrix. Drying occurs at temperatures ranging between 5°C and 300°C. One disadvantage of the above preparation process is that it is quite complex since the starting materials must be brought in suspended form before being admixed, and all the added liquid must be removed afterwards. Another disadvantage is that quite pure and therefore expensive iron-containing pigments must be used as starting materials.

### Summary of the invention

One object of aspects of the present invention is to provide a method of manufacturing a sorbent material and a material obtainable therefrom which are more economical than prior art methods and materials. Another object is to provide such methods which are simpler.

Yet another object of aspects of the present invention is to provide methods of manufacturing a sorbent material which are more environmentally friendly, in particular in that they allow using waste streams as starting materials for the manufacture of the sorbent materials.

Another object of aspects of the present invention is to provide a sorbent material which is mechanically and chemically stable and is suitable for use in flow-through devices.

According to a first aspect of the invention, there is therefore provided a method of manufacturing a sorbent material as set out in the appended claims.

According to a second aspect of the invention, there is provided a sorbent material, as set out in the appended claims.

According to a third aspect of the invention, there is provided a filter device, in particular for treating water, comprising the sorbent material according to the second aspect.

According to a fourth aspect of the invention, there is provided a use of the sorbent material according to the second aspect for removing toxic elements from a liquid, in particular from water, in particular by adsorption. The toxic elements are advantageously one or more of: phosphorus and arsenic.

**Brief description of the figures**

Aspects of the invention will now be described in more detail with reference to the appended drawings, wherein same reference numerals illustrate same features and wherein:

Figure 1 represents a flow diagram of a method according to aspects described herein;
Figure 2 represents a flow diagram of a pre-processing operation on the first granular material according to aspects described herein;
Figure 3 represents a graph of an X-ray diffraction (XRD) spectrum of iron sludge;
Figure 4 represents a graph of an XRD spectrum of alum sludge;
Figure 5 represents a graph of an XRD spectrum of a sample of the obtained sorbent material;
Figures 6a-b represent graphs showing removal of P for different sorbent materials as function of time for a concentration of 0.5 mg $L^{-1}$ (Fig. 6a) and 5 mg $L^{-1}$ (Fig. 6b). In every test 100 ml solution was used and 5 g sorbent material. The samples were shaken at 100 rpm.
Figures 7a-b represent graphs showing phosphates removal efficiency of different sorbent materials in a column experiment. The phosphate starting concentration was 5 mg $L^{-1}$, the flow rate 39 ml $min^{-1}$ and the sorbent volume 98 $cm^3$.
Figures 8a-c represent pore size distribution determined using mercury intrusion porosimetry. Fig. 8a shows results for sample M2b. Fig. 8b shows results for commercial Ferrosorp® granulates, and Fig. 8c shows results for sorbents from alum sludge.
Figure 9a represents the Langmuir isotherm obtained by fitting data of adsorbed arsenate. Figure 9b represents the Freudlich isotherm.

**Description of embodiments**

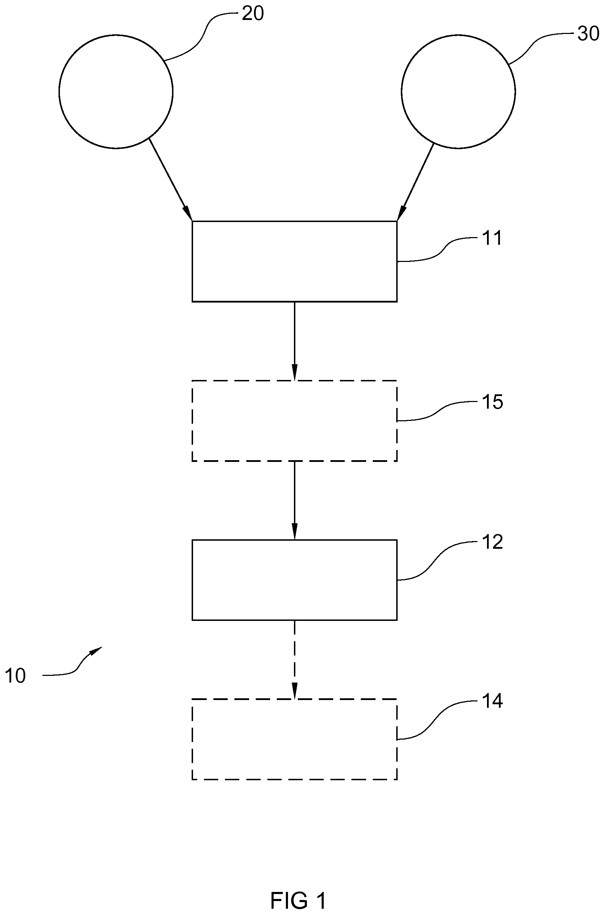

Referring to Fig. 1, a method 10 according to aspects of the present invention comprises an operation 11 in which a first granular material 20 and a second granular material 30 are mixed to obtain a mixture, which is advantageously granular.

The first granular material 20 comprises iron. Iron compounds are known to be effective as adsorbent material, in particular for phosphorous and arsenic. Advantageously, the iron (Fe) content of the first granular material is at least 30%, advantageously at least 45%, advantageously at least 55%, advantageously at least 65% by weight, as can be determined by X-ray fluorescence. The first granular material advantageously comprises iron oxide, iron hydroxide and/or iron oxide-hydroxide. Such iron compounds can occur in various molecular compositions and combinations, and all may be suitable in the first granular material. Examples of iron compounds that are possibly present in the first granular material are any one or combinations of: magnetite, hematite and ferrihydrite. Yet advantageously, the first granular material comprises amorphous iron hydroxide. Amorphous iron hydroxide can refer to poor crystalline phases of iron hydroxide. Such amorphous iron hydroxide phases can be detected in an XRD diagram by any one of two broad peaks corresponding at $2\theta$ between 30-40 and between 60-70. These peaks can be considered to be poor crystalline iron oxide. The XRD pattern is similar to 2-line ferrihydrite, $Fe_4(O, OH, H_2O)_{12}$.

Advantageously, the first granular material is, or is obtained from, an iron-rich sludge. The term sludge as used herein can refer to any waste in solid, semi-solid, or suspended form generated from a municipal, commercial, or industrial wastewater treatment plant, water supply treatment plant, or air pollution control facility exclusive of the treated effluent from a wastewater treatment plant. An iron-rich sludge can refer to a ferruginous precipitate from water, in particular from a water treatment plant, such as a drinking water treatment plant. The iron-rich sludge may comprise phases of one or a combination of: quartz, calcite, dolomite and ankerite. The iron-rich sludge is a waste material, and is advantageously used as starting material in present methods.

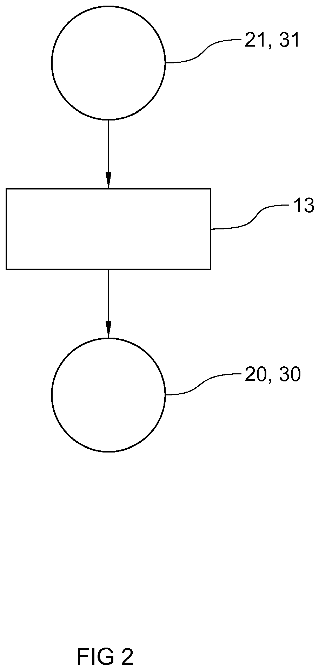

Referring to Fig. 2, an iron containing starting material 21, such as iron-rich sludge, may optionally require one or more pre-processing operations 13 in order to be fit for use as the first granular material 20. In particular, the starting material 21 may comprise a considerable amount of water, e.g. moisture content in excess of 50%, or even 70% or more by weight. In these cases, the pre-processing operation 13 can comprise drying the starting material in order to reduce the moisture content to more acceptable levels. Suitable levels of moisture content may vary and can depend on e.g. the moisture content of the second granular material, and downstream processing steps. By way of example, operation 13 can comprise drying the starting material 21 to a moisture content of 35% or less, advantageously 25% or less, advantageously 15% or less, advantageously 5% or less.

In addition, or alternatively, the starting material 21 may be too coarse for use as the first granular material 20. Therefore, the pre-processing operation 13 may comprise a comminuting operation, e.g. milling. The particle size distribution of the first granular material, such as obtained following operation 13, advantageously has a 90-percentile diameter $d_{90}$ smaller than or equal to 100 $\mu$m, advantageously smaller than or equal to 50 $\mu$m, advantageously smaller

than or equal to35 $\mu$m, and advantageously at least 5 $\mu$m. Advantageously, the 50-percentile diameter $d_{50}$ of the particle size distribution of the first granular material is smaller than or equal to 25 $\mu$m, advantageously is smaller than or equal to 15 $\mu$m, advantageously is at least 1 $\mu$m. Advantageously, the 10-percentile diameter $d_{10}$ is smaller than or equal to 10 $\mu$m, advantageously is smaller than or equal to 5 $\mu$m, advantageously is at least 0.1 $\mu$m. Particle size distribution can be determined by laser diffraction.

The second granular material comprises aluminium hydroxides. These aluminium hydroxides are advantageously present in amorphous form in the second granular material. Advantageously, the Aluminium (Al) content of the second granular material is at least 30%, advantageously at least 45%, advantageously at least 55%, advantageously at least 65% by weight, as can be determined by X-ray fluorescence. Phases other than aluminium hydroxide may be absent in the second granular material.

Advantageously, the second granular material is, or is obtained from, a waste stream comprising aluminium hydroxide, in particular alum sludge. Alum sludge refers to a by-product of drinking water treatment, in which alum, generally referred to as aluminium sulfate, or other aluminium compounds clarify water by forming a gelatinous precipitate of aluminium hydroxide. The waste stream comprising this precipitate is referred to as alum sludge. The alum sludge is a waste material, and is advantageously used as starting material in present methods.

Still referring to Fig. 2, a starting material 31 comprising aluminium hydroxide, such as alum sludge, may optionally require one or more pre-processing operations 13 in order to be fit for use as the second granular material 30. In particular, the starting material 31 may comprise a considerable amount of water, e.g. moisture content in excess of 50%, or even 70% or more by weight. In these cases, the pre-processing operation 13 can comprise drying the starting material in order to reduce the moisture content to more acceptable levels. Suitable levels of moisture content may vary and can depend on e.g. the moisture content of the first granular material, and downstream processing steps. By way of example, operation 13 can comprise drying the starting material 31 to a moisture content of 35% or less, advantageously 25% or less, advantageously 15% or less, advantageously 5% or less.

In addition, or alternatively, the starting material 31 may be too coarse for use as the second granular material 30. Therefore, the pre-processing operation 13 may comprise a comminuting operation, e.g. milling. The particle size distribution of the second granular material 30, such as obtained following operation 13, advantageously has a 90-percentile diameter $d_{90}$ (i.e., 90% of the particles are below this value) smaller than or equal to 100 $\mu$m, advantageously smaller than or equal to 50 $\mu$m, advantageously smaller than or equal to 35 $\mu$m, and advantageously at least 5 $\mu$m. Advantageously, the 50-percentile diameter $d_{50}$ (i.e., 50% of the particles are below this value) of the particle size distribution of the first granular material is smaller than or equal to 25 $\mu$m, advantageously is smaller than or equal to 15 $\mu$m, advantageously is at least 1 $\mu$m. Advantageously, the 10-percentile diameter $d_{10}$ is smaller than or equal to 10 $\mu$m, advantageously is smaller than or equal to 5 $\mu$m, advantageously is at least 0.1 $\mu$m. Particle size distribution can be determined by laser diffraction. A pre-processing operation 13 on the starting material 31 as indicated above, e.g. drying and/or milling, was found to advantageously enhance the attrition stability of the obtained sorbent material, in particular in case of higher iron content of the mixture. Such pre-treatment was advantageously not found to affect the absorbent capacity of the sorbent material.

Referring again to Fig. 1, the first granular material 20 and the second granular material 30 are advantageously mixed in such proportions that the Fe to Al ratio (expressed by weight) in the granular mixture is between 0.5 and 3.5, advantageously between 1 and 3. It was observed that Fe/Al ratios of 4 or higher led to granules having poor mechanical strength.

The mixture obtained in operation 11 advantageously is a granular mixture formed of granules having suitable dimensions for use as a granular sorbent. The particle size of the granular mixture is advantageously between 0.5 mm and 15 mm, advantageously between 1 mm and 10 mm, advantageously between 1 mm and 5 mm, providing the best balance between available adsorption surface and pressure resistance in flow-through applications. Indicated particle sizes may be obtained by virtue of the mixing operation itself, e.g. by agglomeration. Agglomeration can be due to the residual moisture content in the first and/or second granular materials, or through the addition of small amounts of water during the mixing operation. Suitable water content of the mixture of the first and second granular materials during operation 11 advantageously falls between 10% and 30%, advantageously between 15% and 25%.

Operation 11 may additionally comprise shaping the granular mixture, e.g. into a structure which may or may not be granular, e.g. a monolithic structure. Advantageously, the mixture is pelletized to pellets or granules of suitable dimensions as indicated above. The shaping operation may comprise, or consist of a granulation operation. The shaping may be performed simultaneously with the mixing operation, or consecutively. By way of example, granulating and pelletizing mixers perform mixing and granulating/pelletizing in a single machine. Suitable examples of such machines are the intensive mixers manufactured by Maschinenfabrik Gustav Eirich, Germany. Other shaping operations, in particular leading to other shapes, may alternatively be performed.

According to an aspect of the present invention, the granular mixture as obtained in operation 11 is subjected to a thermal treatment in operation 12. The thermal treatment advantageously comprises calcining the granular mixture at a temperature between 400°C and 950°C, advantageously at a temperature between 450°C and 750°C, advantageously 650°C or less. In operation 12 the granular mixture is advantageously dried prior to calcination. Suitable drying temperatures are between 40°C and 100°C, maintained for at least 6 hours, advantageously at least 8 hours, depending on the moisture content of the granular mixture.

It has surprisingly been observed that the thermal treatment as described herein converts the aluminium hydroxide phases in the second granular material to stable aluminium oxide phases which act as a binder creating stable granules. It was found that the conversion of aluminium hydroxide phases to aluminium oxide occurs at the indicated temperatures which are lower than 1000°C. At temperatures below 1000°C, the sorption capacity of the iron phases, e.g. from the first granular material is not significantly affected, so that sorbent materials obtained by present methods may have superior sorption performance.

Despite these low thermal treatment temperatures, very strong granules are obtained. As will be shown in the examples below, single granule crush strengths of 3 MPa and higher are obtained. Without wishing to be bound by theory, the strength and stability may be due to the conversion of aluminium hydroxides to aluminium oxides during the thermal treatment. The conversion may be facilitated by use of amorphous aluminium hydroxide phases in the second granular material.

The thermal treatment may further have a beneficial effect on the porosity of the granules of the sorbent material obtained. Advantageously, either one, or both, the first granular material 20 and the second granular material 30 may comprise substantial amounts of organic materials. The organic content in either one, or both first and second granular materials may range between 5% and 60%, advantageously between 10% and 50%. By way of example, iron-rich sludge and alum sludge naturally contain a substantial organic fraction. The organic compounds are advantageously mixed between the inorganic phases of the first and/or second granular material. As the organic fraction is burnt out during the thermal treatment, a porosity is obtained which may improve the sorptive performance of the obtained granular materials.

In an optional operation 14, following operation 12, the thermally treated granular material may be post processed as desired. Post processing may comprise sieving the granular material to obtain fractions with different particle size. It will be convenient to note that some post processing operations, such as sieving, may be effected on the granular mixture in an optional operation 15, between operations 11 and 12.

Above methods hence allow for obtaining a sorbent material, which can be shaped in any desired form (e.g., prior to operation 12). The sorbent material is advantageously granular, e.g. formed as beads or pellets. Alternatively, complex flow-through structures can be devised, e.g. by shaping the mixture to obtain a monolithic structure, e.g. a fibre network, e.g. built up in a layerwise fashion. Such structures may have a good macroscopic permeability and low hydrostatic pressure, and can be thermally treated.

The sorbent material is a composite material, which advantageously comprises phases rich in iron oxides bound in a matrix which is rich in aluminium oxide. The iron oxides may have been converted from iron hydroxides originating from the first granular material and/or may have been naturally present in the first granular material. The matrix is advantageously formed by the thermal treatment, which has converted a significant part of the aluminium hydroxides to aluminium oxide. The sorbent material may comprise phases of calcite ($CaCO_3$), quartz ($SiO_2$), magnetite ($Fe_3O_4$) and/or hematite ($Fe_2O_3$), which may be dispersed through the matrix. Suitable compositions of the sorbent material comprise aluminium oxide ($Al_2O_3$), advantageously in a proportion between 5% and 35%, advantageously between 6% and 30%, advantageously between 7% and 25% by weight, and iron oxide ($Fe_2O_3$), advantageously in a proportion between 10% and 50% by weight, advantageously between 15% and 45%, advantageously between 20% and 40%.

The sorbent material advantageously has a high mechanical strength and high chemical stability. The single granule crushing strength (i.e. the compressive strength) advantageously is at least 2 MPa, advantageously at least 2.5 MPa, advantageously at least 3 MPa, advantageously at least 3.6 MPa, advantageously at least 5 MPa. Compressive strength can be determined using an Instron 5582 universal testing bench. The maximal load can be set to 1 kN and speed of the frame to 0.5 mm/min. The aluminium oxide matrix acts as a glue giving the sorbent granules mechanical stability and decreasing or even avoiding attrition. In addition, the aluminium oxide is also known to act as a phosphate and arsenate sorbent, and still retains said sorbent activity. Hence, the aluminium oxide advantageously has a dual function in the composite materials thus obtained. A bulk density of the obtained sorbent materials my range between 600 kg/m$^3$ and 980 kg/m$^3$.

Advantageously, the sorbent material features a porosity. An average pore diameter, e.g. within granules of the sorbent material, is advantageously between 0.5 $\mu$m and 10 $\mu$m, advantageously between 1 $\mu$m and 5 $\mu$m, as determined by mercury intrusion. Such macroporosity facilitates a fast adsorption kinetics with advantageously less than 5 min. contact time needed.

With the above characteristics, a good adsorption capacity can be obtained. In particular, the maximum adsorption capacity ($Q_{max}$ as calculated from the Langmuir isotherm) of the sorbent material for phosphate is at least 10 mg phosphate/g sorbent, advantageously at least 15 mg/g, advantageously between 20 mg/g and 35 mg/g. In particular, the maximum adsorption capacity ($Q_{max}$ as calculated from the Langmuir isotherm) of the sorbent material for Arsenate is at least 5 mg Arsenate/g sorbent, advantageously at least 10 mg/g.

The sorbent material is advantageously used in liquid treatment devices, in particular water treatment devices.

Suitable uses are adsorption of phosphorous (e.g., phosphates) and/or arsenic. The liquid treatment devices advantageously comprise a bed of the granular sorbent material through which the liquid is arranged to flow.

Advantages of the methods and obtained sorbent materials can be summarized as being one or more of the following:

- the material does not disintegrate over time,
- the sorption capacity of the iron compounds present in the sorbent material is not affected,
- a stable iron-based sorbent material is obtained without treatment at temperatures above 1000°C.

**Example 1: Starting materials**

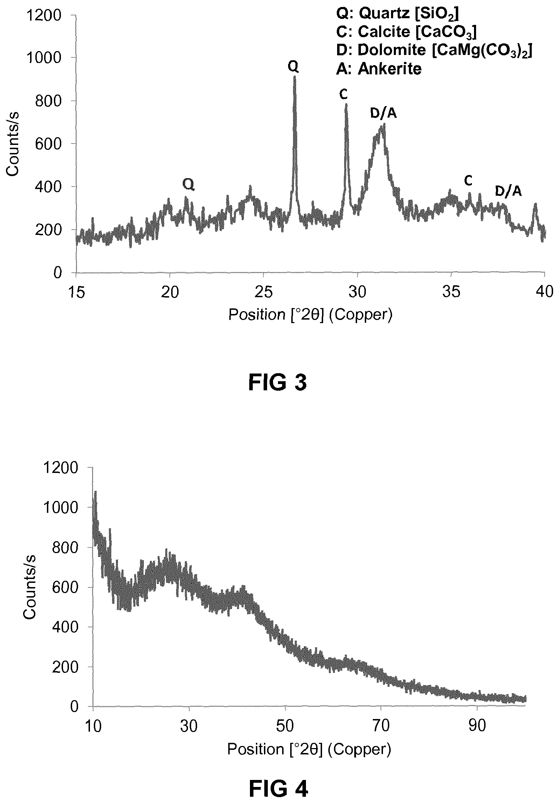

Iron sludge from the coagulation process in a drinking water treatment plant from surface water (Diksmuide, Belgium) and alum sludge from the coagulation process in a drinking water treatment plant from surface water (Evergem-Kluizen, Belgium) are used as starting material for the first granular material and the second granular material, respectively. The average properties of the two starting materials are given in Table 1. The iron sludge contains mainly amorphous iron hydroxides. Also ankerite, quartz, calcite and dolomite are detected. The alum sludge contains mainly amorphous aluminium hydroxides, no other phases were detected. Both starting materials contain a significant amount of organic material. The elemental composition of the dried starting materials was determined using X-ray fluorescence (XRF) and the results are shown in Table 2. The XRD-spectrum was determined and is shown in Fig. 3 for the iron sludge and Fig. 4 for the alum sludge.

*Table 1: Characteristics of both starting materials.*

|  | Alum sludge | Iron sludge |
|---|---|---|
| Organic content | 35-45 % | 20 - 40 % |
| BET surface area | - | 14 $m^2$/g |
| Particle size of starting material | $d_{10}$ = 16 $\mu$m<br>$d_{50}$ = 55 $\mu$m<br>$d_{90}$ = 147 $\mu$m | $d_{10}$ = 1-2 $\mu$m<br>$d_{50}$ = 2-9 $\mu$m<br>$d_{90}$ = 70-100 $\mu$m |
| Particle size after milling (first and second granular materials) | $d_{10}$ = 2-4 $\mu$m<br>$d_{50}$ = 6-9 $\mu$m<br>$d_{90}$ = 17-20 $\mu$m | $d_{10}$ = 1 $\mu$m<br>$d_{50}$ = 3 $\mu$m<br>$d_{90}$ = 10 $\mu$m |

*Table 2: Composition of both starting materials determined using XRF*

| SAMPLE | Alum sludge | Iron sludge |
|---|---|---|
| Nb | <LOD | 0,003 |
| Zr | 0,044 | 0,038 |
| Bi | 0,004 | <LOD |
| Pb | 0,004 | <LOD |
| Zn | 0,014 | 0,079 |
| Cu | <LOD | 0,023 |
| **Fe** | **4,198** | **79,34** |
| Mn | <LOD | 0,633 |
| Cr | 0,384 | 0,09 |
| V | 0,247 | 0,072 |
| Ti | 0,112 | 0,148 |
| **Al** | **66,451** | **2,301** |
| S | <LOD | 0,76 |

(continued)

| SAMPLE | Alum sludge | Iron sludge |
|--------|-------------|-------------|
| Si | 28,541 | 12,375 |

**Example 2: Preparation procedure**

Three mixture samples M1-M3 were prepared with the starting materials of Example 1. The iron sludge was completely dried (moisture content < 5%) and milled to the particle size distribution described in Table 1 and used as first granular material in all sample preparations. For the first sample M1, the alum sludge was completely dried (moisture content < 5%) to obtain the second granular material. In the latter two samples M2 and M3, the alum sludge was additionally milled to the particle size distribution described in Table 1 and partially dried until a moisture content of about $\pm 30\%$. Drying was carried out at 40°C. Indicated values of moisture content are expressed by mass.

The first and second granular materials were mixed in different proportions in the three samples, to obtain different Fe/Al ratios. For sample M2, a Fe/Al ration of 2.7 was used. The Fe/Al ratio of M1 was 1 and of M3 was 4. The samples were mixed together with water (to obtain a total moisture content of 15%) in an intensive mixer (EIRICH R02 high shear mixer) to obtain a granular mixture. Stable granules could be obtained for all three samples.

The obtained granular mixture was dried at 40°C overnight. Next, the dried granular mixture was sieved into the desired granule fraction (1 mm - 4 mm). This fraction provides the best balance between available adsorption surface and pressure resistance in flow-through applications. The dried granulates were separated in subsamples and the different subsamples were thermally treated at three different temperatures of 500°C, 550°C and 600°C for 2 hours.

**Example 3: Properties**

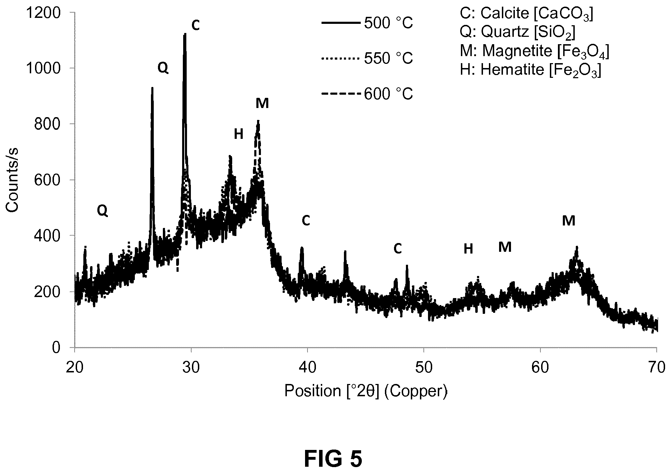

In the obtained material following mixing and thermal treatment, about four crystalline materials are detected: Calcite, Magnetite, Hematite and Quartz. But also a large amorphous fraction (amorphous iron oxide) is present. An XRD spectrum is shown in Fig. 5 for sample M2.

The values for the single granule crush strength (SCS) of the obtained sorbent material are given are given in Table 3, along with comparative values of a commercial granulated phosphate material (FerroSorp® and granulates produced from 100% alum sludge. It can be seen that the materials obtained according to aspects of the present invention have a higher average mechanical strength compared to the commercial sample. What is surprising, is the fact that the SCS strength of the composites is higher than the value of the granulates that contain only alum sludge, which acts as an active binder for the ratio 1 and 2.7. There is no significant effect of the calcination temperature on the SCS, although the treatment at 550°C appears to provide the best results. For the composites, higher concentrations of alum sludge added advantageously results in higher SCS strength. At a Fe/Al ratio of 4 the alum sludge binder still provides stable granules, but appears to fail in providing mechanical strength.

Table 3: Average single granule crush strength for the different samples prepared in Example 2 and for granulates from alum sludge and the commercial Ferrosorp® material.

| | temperature | Fe/Al ratio | SCS |
|--------|-------------|-------------|-----|
| M1 | 500°C | 1 | 6.6 MPa |
| | 550°C | 1 | 9.6 MPa |
| | 600°C | 1 | 6.3 MPa |
| M2a* | 500°C | 2,7 | 3.2 MPa |
| | 550°C | 2,7 | 5.6 MPa |
| | 600°C | 2,7 | 3.7 MPa |
| M2b* | 550°C | 2,7 | 3.6 MPa |
| M3 | 550°C | 4 | 0.88 MPa |
| Alum sorbent | 500°C | - | 1.2 MPa |
| | 550°C | - | 1,4 MPa |
| | 600°C | - | 2.3 MPa |

(continued)

|  | temperature | Fe/Al ratio | SCS |
|---|---|---|---|
| Ferrosorp | - | - | 1.4 MPa |
| *Results from in duplo production experiments to indicate spread.* | | | |

Apart from the mechanical stability, the attrition in water may be an important characteristic. The sorbents should not release particles or break up in water as this would clog the filter and color the water. The composite sorbent materials M1 and M2 were shaken in water for 24 hours at 100 rpm. The composite sorbent materials showed no eluate discharge. Values of eluate turbicity measurements are given in Table 4. The developed materials are in a similar range as the commercial material Ferrosorp and much lower as for example iron coated sands which are used in several demo-cases.

*Table 4: Turbicity of 5 g of material after 24 hours shaking at 100 rpm in 100 ml water.*

| Material | turbicity |
|---|---|
| M2b | 16(13) NTU |
| Ferrosorp | 11 NTU |
| Iron coated sands | 626 NTU |

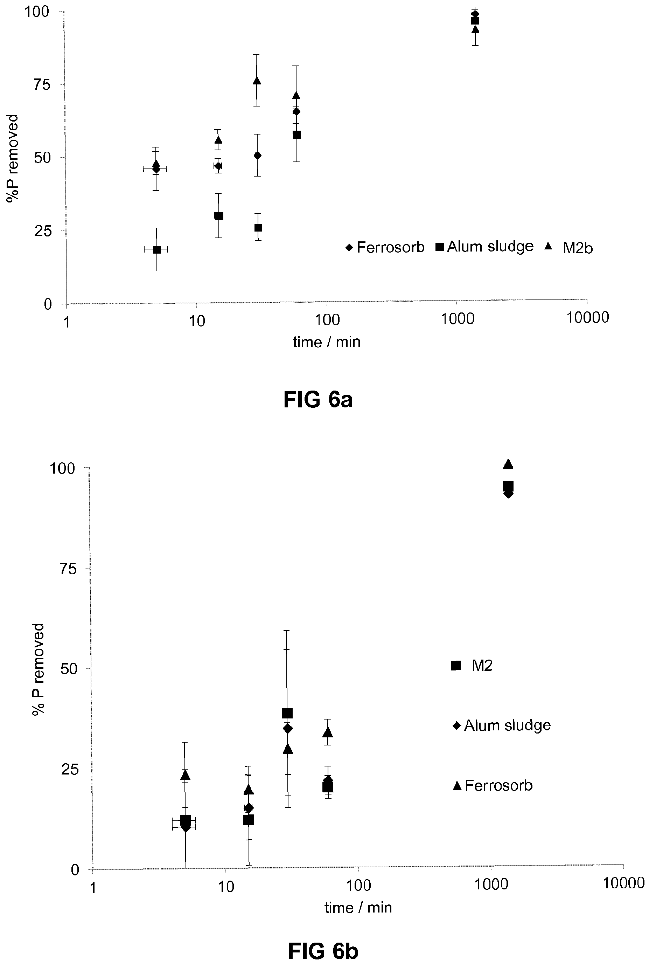

One possible objective of phosphate sorbents may be to lower the phosphate concentration in surface water to below 0.3 mg L$^{-1}$. The concentration of phosphate depends on the problem area. By way of example, effluent of greenhouses can contain up to 30 mg L$^{-1}$ phosphates. However, most drainage and surface water contains about 0.5 mg L$^{-1}$ with peaks up to 6 mg L$^{-1}$ phosphates. Static experiments were performed to compare our developed granulates at relevant concentrations of 0.5 and 5 mg L$^{-1}$ phosphate and 0.01 M $CaCl_2$ was added to mimic the ionic strength of surface water. The liquid to solid ratio amounted to 20 and the samples were shaken at 100 rpm. The phosphate removal efficiency as a function of are shown Figs. 6a-b. The developed sorbents (M2) had a similar behaviour as the commercial Ferrosorp material and the pure alum-sludge samples in static tests.

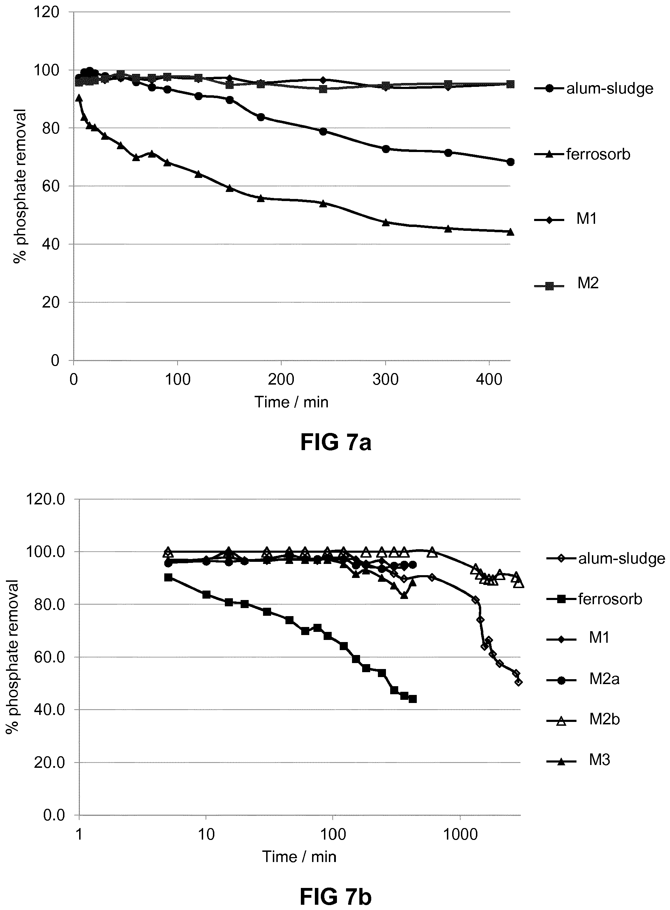

The obtained materials were also tested in a column mimicking flow-through applications. The resulting phosphate removal is shown in Figs. 7a-b. The figure shows that phosphate removal efficiency of the developed sorbents remains at levels of about 95% even after 6 hours, which is significantly higher than the sorption efficiency of the commercial material in a flow test. After 16 hours (Fig. 7b), the phosphate removal efficiency is at about 90%, whereas that of other sorbents falls down to less than 50%. The decrease in phosphate removal efficiency is not observed in the first 7 hours for the developed materials (M1 & M2), while it starts at 2 hours for the alum-sludge sorbents and immediately for the Ferrosorp.

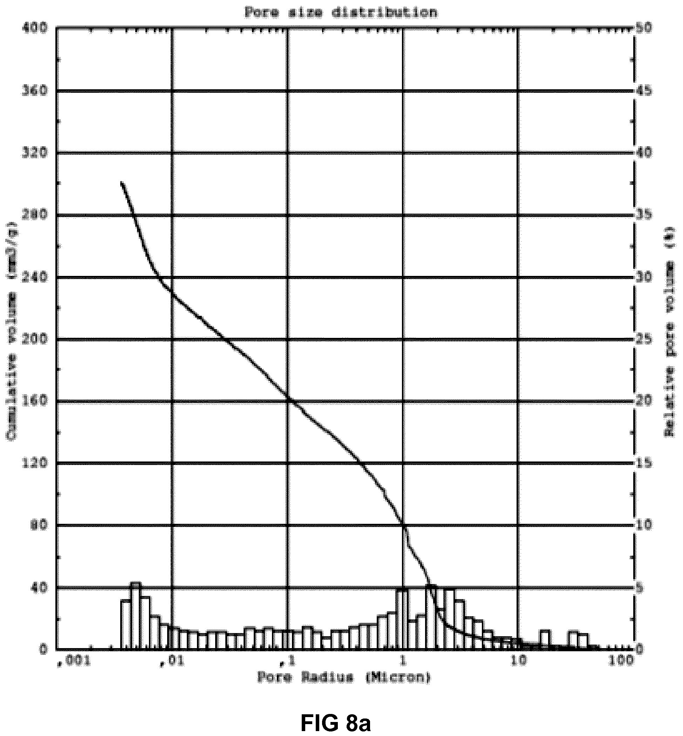

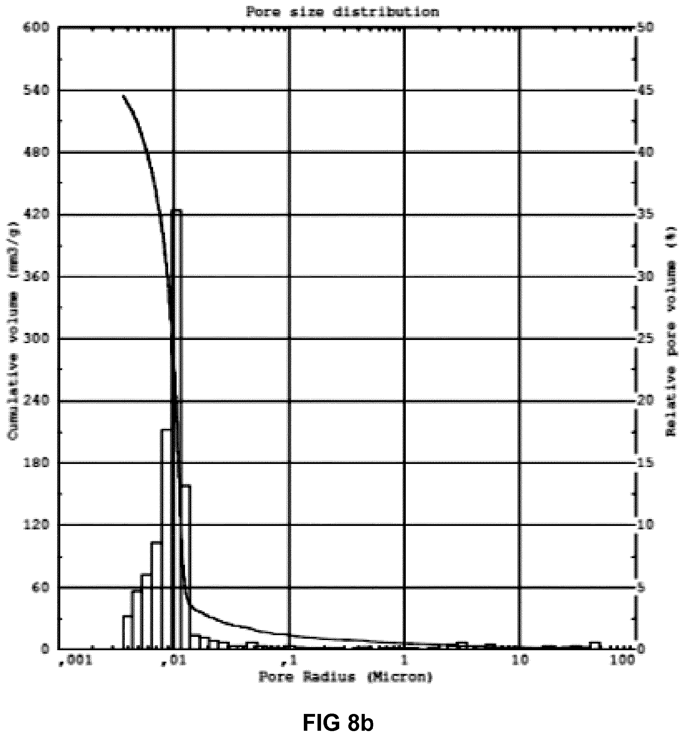

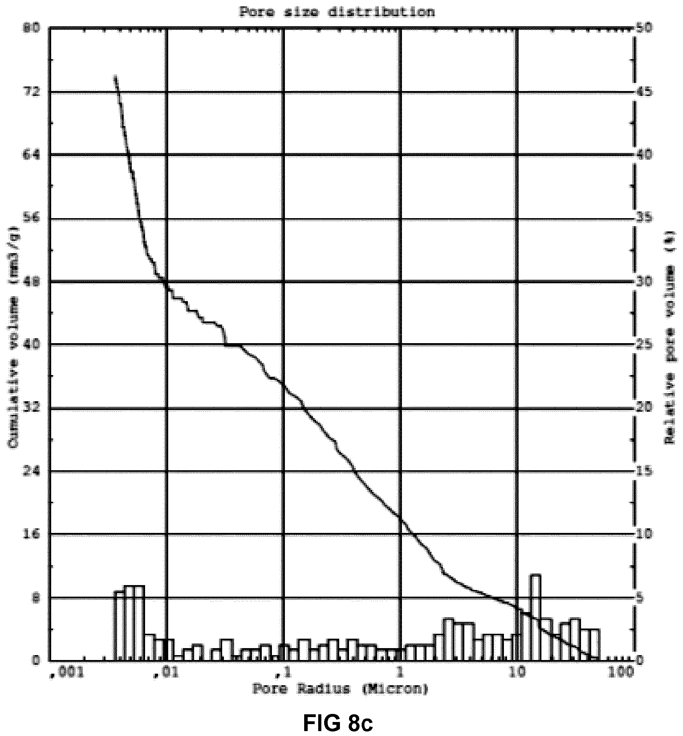

Hg-intrusion porosimetry was used to measure the presence of open porosity in the granules of the sorbent material. Fig. 8a shows results for the M2b sample, and compares with those of commercial Ferrosorp (Fig. 8b) and alum sludge granulates (Fig. 8c). The obtained sorbent material granules had a (macro)porosity with an average pore diameter between 2 $\mu$m and 3 $\mu$m. This contrasts with the ferrosorb particle size distribution with average pore diameter of 0.01 $\mu$m. The (macro)porosity may be due to the high organic content of the starting materials, which is burnt out during the calcination step and leaves open pores. The material density of the M2b sample was determined to be 4.60 g/cm$^3$ (as determined using Helium Pyknometry) and bulk density of 780 kg/m$^3$.

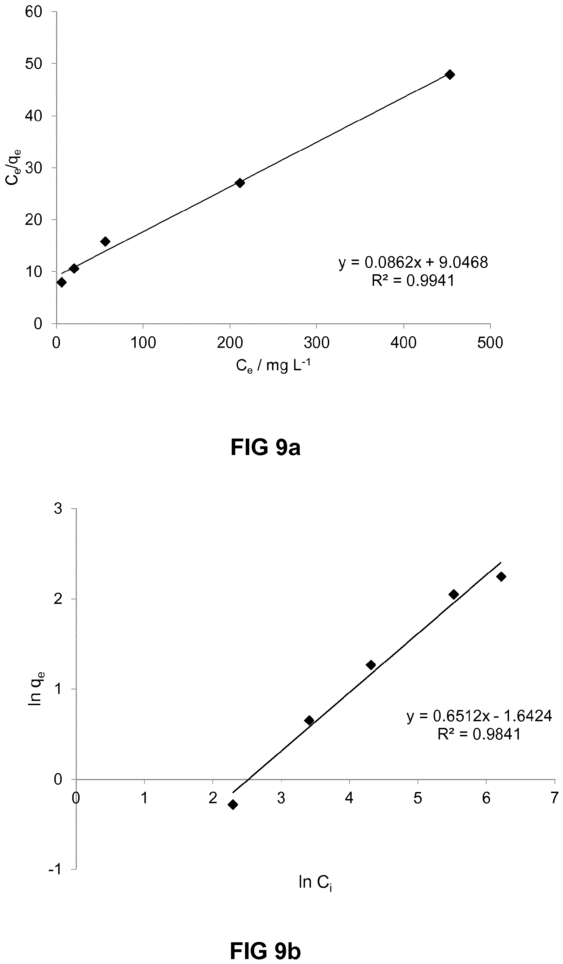

Sorbent materials according to aspects described herein also allow for removing arsenate. To test the maximum removal capacity static experiments were performed on sample M2b. To this end, different arsenate solutions where prepared by dissolving different amounts of $Na_3AsO_4$ in water. Of these solutions 100 ml was taken and brought into contact with 0.5 g of the sorbent material and shaken for 24 hours. Afterwards the eluate was filtered and the arsenic concentration was measured by ICP. All experiments were done in doublets. The amount of metal adsorbed per unit mass is calculated as

$$Q_e = \frac{(C_i - C_e)V}{m}$$

where $C_i$ and $C_e$ are the initial and equilibrium concentration (mg/l), m is the mass of the adsorbent (g) and v is the volume of the solution (ml). From the obtained data the Langmuir and Freudlich isotherm can be determined as shown in Fig. 9a and 9b respectively. The fitted data for these isotherms is given in Table 5. The data is best fitted by the Langmuir model. The maximum capacity ($Q_{max}$) determined from this model is 11.5 mg arsenate per g of sorbent material. The b constant amounted to 0.00958 L mg$^{-1}$.

Table 5: Parameters describing the Langmuir and Freudlich isotherms

| Langmuir parameters | | |
|---|---|---|
| $Q_{max}$ = 11.5 mg g$^{-1}$ | b = 0.00958 L mg$^{-1}$ | $R^2$ = 0.9941 |
| Freudlich parameters | | |
| N = 1.536 | Ln K = -1.64 | $R^2$ = 0.9841 |

**Claims**

1. Method of manufacturing a sorbent material, comprising:

   mixing (11) a first granular material (20) comprising iron and a second granular material (30) comprising aluminium hydroxide to obtain a mixture, **characterized in that** the mixture is subjected to a thermal treatment (12) at a temperature between 400°C and 950°C.

2. Method of claim 1, wherein the second granular material (30) comprises amorphous aluminium hydroxide.

3. Method of claim 1 or 2, wherein the first granular material (20) comprises amorphous iron hydroxide.

4. Method of any one of the preceding claims, wherein one or both of the first granular material and the second granular material comprise an organic fraction of at least 10% by weight of the respective granular material.

5. Method of any one of the preceding claims, wherein the first granular material is, or is obtained from, iron-rich sludge from water treatment.

6. Method of any one of the preceding claims, wherein the second granular material is, or is obtained from, alum sludge.

7. Method of any one of the preceding claims, wherein the first granular material and the second granular material are mixed in a proportion such that a ratio of Fe to Al is between 0.5 and 3.5 by weight.

8. Method of any one of the preceding claims, wherein the thermal treatment (12) comprises drying the mixture at a temperature of 100°C or less during at least 6 hours followed by calcining the mixture at a temperature between 400°C and 750°C.

9. Method of any one of the preceding claims, wherein the mixture is pelletized in the presence of water to a granulate size between 0.5 mm and 15 mm prior to the thermal treatment.

10. Method of any one of the preceding claims, wherein one or both the first granular material and the second granular material have a particle size distribution with 90 percentile of particle diameter being smaller than or equal to 100 $\mu$m.

11. Sorbent material, comprising a first phase rich in iron oxides bound by a matrix rich in aluminium oxide.

12. Sorbent material of claim 11, wherein the sorbent material comprises a porosity with an average pore diameter between 0.5 $\mu$m and 10 $\mu$m as determined by mercury intrusion.

13. Sorbent material of claim 11 or 12, wherein a ratio of Fe to Al is between 0.5 and 3.5.

14. Sorbent material of any one of the claims 11 to 13, the sorbent material having a compressive strength of at least 2 MPa.

15. Use of the sorbent material of any one of the claims 11 to 14 for removing one or more of phosphate and arsenic from a liquid.

20

30

11

15

12

10

14

FIG 1

21, 31

13

20, 30

FIG 2

Q: Quartz [$SiO_2$]
C: Calcite [$CaCO_3$]
D: Dolomite [$CaMg(CO_3)_2$]
A: Ankerite

**FIG 3**

**FIG 4**

**FIG 5**

**FIG 6a**

**FIG 6b**

**FIG 7a**

**FIG 7b**

**FIG 8a**

**FIG 8b**

**FIG 8c**

**FIG 9a**

**FIG 9b**

Europäisches
Patentamt

European
Patent Office

Office européen
des brevets

**EUROPEAN SEARCH REPORT**

Application Number

EP 17 21 0585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUBAR N I ET AL: "Adsorption of phosphate ions on novel inorganic ion exchangers", COLLOIDS AND SURFACES A: PHYSIOCHEMICAL AND ENGINEERING ASPECTS, ELSEVIER, AMSTERDAM, NL, vol. 255, no. 1-3, 21 March 2005 (2005-03-21), pages 55-63, XP027803044, ISSN: 0927-7757 [retrieved on 2005-03-21] | 11-15 | INV. B01J20/06 B01J20/08 B01J20/28 B01J20/30 C02F1/28 |
| Y | * abstract * * table 1 * * 2.2. Materials and Methods; page 56, left-hand column * | 1-10 | |
| X | ADRIANO FREITAS DE SOUSA ET AL: "Adsorption of phosphate using mesoporous spheres containing iron and aluminum oxide", CHEMICAL ENGINEERING JOURNAL, vol. 210, 1 November 2012 (2012-11-01), pages 143-149, XP055488149, CH ISSN: 1385-8947, DOI: 10.1016/j.cej.2012.08.080 | 11-15 | TECHNICAL FIELDS SEARCHED (IPC) B01J C02F |
| Y | * abstract * * 2.1. Preparation of adsorbents; page 144, left-hand column * | 1-10 | |

-/--

The present search report has been drawn up for all claims

| Place of search | Date of completion of the search | Examiner |
|---|---|---|
| The Hague | 26 June 2018 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 21 0585

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONER ALTUNDOGAN H ET AL: "Arsenic removal from aqueous solutions by adsorption on red mud", WASTE MANAGEM, ELSEVIER, NEW YORK, NY, US, vol. 20, no. 8, 1 December 2000 (2000-12-01), pages 761-767, XP004216900, ISSN: 0956-053X, DOI: 10.1016/S0956-053X(00)00031-3 | 11-15 | |
| Y | * abstract *<br>* table 1 *<br>* 2.2. Activation of red mud; page 358, left-hand column * | 1-10 | |
| Y | M. NAGEEB RASHED ET AL: "Adsorption of methylene blue using modified adsorbents from drinking water treatment sludge", WATER SCIENCE AND TECHNOLOGY, vol. 74, no. 8, 9 August 2016 (2016-08-09), pages 1885-1898, XP055488040, ISSN: 0273-1223, DOI: 10.2166/wst.2016.377<br>* abstract *<br>* table 1 *<br>* Sample collection and Physical activation of AS and MS; page 1886 * | 1-10 | TECHNICAL FIELDS SEARCHED (IPC) |
| A | TIE JINGXI ET AL: "Phosphorus Adsorption Characteristics of Alum and Iron Sludge from Drinking-Water Treatment Works", BIOINFORMATICS AND BIOMEDICAL ENGINEERING (ICBBE), 2010 4TH INTERNATIONAL CONFERENCE ON, 1 June 2010 (2010-06-01), pages 1-3, XP055488015, Piscataway, NJ, USA DOI: 10.1109/ICBBE.2010.5517907 ISBN: 978-1-4244-4712-1<br>* the whole document * | 1-15 | |

The present search report has been drawn up for all claims

| Place of search | Date of completion of the search | Examiner |
|---|---|---|
| The Hague | 26 June 2018 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020077249 A